# EUROPEAN PATENT SPECIFICATION

(11) **EP 2 911 798 B1**
(45) Date of publication and mention of the grant of the patent: **26.07.2017**
(21) Application number: 13783504.7
(22) Date of filing: 17.10.2013
(51) Int. Cl.: B05B 1/16, A01M 7/00

(54) **MULTIPLE NOZZLE HOLDER ASSEMBLY WITH INCREASED OPERATING FLEXIBILITY**
HALTERANORDNUNG FÜR MEHRERE DÜSEN MIT ERHÖHTER BETRIEBSFLEXIBILITÄT
ENSEMBLE SUPPORT DE MULTIPLES BUSES PRÉSENTANT UNE SOUPLESSE DE FONCTIONNEMENT ACCRUE

(30) Priority: 29.10.2012 IT MO20120263
(43) Date of publication of application: 02.09.2015
(73) Proprietor: Arag S.r.l., 42048 Rubiera (Reggio Emilia) (IT)
(72) Inventor: GARUTI, Alberto, I-42048 Rubiera (IT); SCHIAVONE, Mario, I-42019 Scandiano (IT)
(74) Representative: Modiano, Micaela Nadia
(86) International application number: PCT/EP2013/071698
(87) International publication number: WO 2014/067785

(56) References cited:
- EP-A1- 1 254 723
- WO-A1-2012/032245
- WO-A1-2012/088014
- CA-A1- 2 804 283
- US-A1- 2006 265 106

## Description

The present invention relates to a multiple nozzle holder assembly with increased operating flexibility.

Spraying machines for controlled distribution on cultivations of plant protection products, such as liquids for fertilizing treatments, herbicides, fungicides, insecticides and the like, are known in the agricultural field.

Such spraying machines are generally fixed on or towed by a tractor that follows a preset path along the cultivation, so that the treatment performed covers its entire extension, and are constituted essentially by a frame that supports a tank for storing the working liquid, which by means of a pumping assembly supplies one or more distribution bars, along which there is a plurality of holes for the outflow of the liquid, to which adapted atomization nozzles are applied by interposing corresponding nozzle holders.

Each nozzle holder comprises a main body for coupling to the distribution bar, which is provided with an inlet for the working liquid that is adapted to be connected to the outlet hole of the distribution bar and one or more outlets that can be associated with corresponding nozzles by means of threaded connections or quick coupling systems, such as a bayonet coupling. The inlet and each outlet are mutually connected by means of a duct for the passage of the working liquid, which in some types of nozzle holders is sectioned by a membrane-type flow control valve or the like, with electromechanical or pneumatic actuation, which, by way e of a remote control system, allows to manage the opening or closing of the outlet in relation to the working parameters that have been set or detected.

One must consider that according to current spraying techniques, the type of nozzles to be used must be selected depending on the working parameters, in order to achieve an ideal drop size that allows to avoid both drift and dripping of the sprayed liquid. Drift phenomena occur when the drops of atomized liquid are too small (generally with a size of less than 100 µm) and therefore risk being dragged by the wind outside of the area to be treated, with consequent risks of scattering harmful substances into the surrounding environment. Moreover, excessively small drop penetrate the ground with greater difficulty. Vice versa, dripping phenomena occur when the drops of liquid that exit from the nozzles are too large (generally with a size of more than 800 µm), so that they tend to fall too close to the spraying point, without achieving optimum distribution of the liquid onto the area to be treated.

For these reasons, it is fundamentally important to perform focused selection of the nozzles to be used and to adjust the operating parameters as a function of the treatment to be performed, so as to keep the size of the dispensed drops within optimum values, also in view of the chemical-physical characteristics of the liquid to be distributed.

In particular, once the volume of liquid to be distributed over a certain area has been determined and the maximum operating pressure of the spraying machine is known, as the speed of travel of the tractor varies, the flow rates that must be delivered by the nozzles change in a directly proportional manner, while the pressure varies in proportion to the square of the flow rate. Owing to these variations of the working parameters, therefore, it can be convenient to modify the type of jet in use, in order to achieve an optimum drop size and at the same time fall within the range of pressures allowed by the spraying machine or to use a type of nozzle with a spraying pattern that is more suitable for the type of treatment to be performed (for example a fan-like pattern rather than a cone-shaped one, or vice versa).

For these reasons, nozzle holder solutions have been developed which allow to select the type of nozzle in use among a range of nozzles installed directly on the nozzle holder.

In this regard, for example, a type of nozzle holder is known which is provided with a single outlet, with the possibility to select the nozzle associated therewith. In this case, the nozzle holder has an additional body that is associated, so that it can rotate among several operating configurations, with the main coupling body and is provided with a plurality of holes adapted to be connected alternately to the outlet in corresponding operating configurations, with each of which a different type of nozzle is associated. The operator, therefore, must select the most appropriate nozzle, on the basis of his experience and of the data provided by the manufacturers, depending on the operating parameters of the treatment to be performed.

However, this solution entrusts the satisfactory outcome of the treatment exclusively to the accuracy of the selection made by the operator and requires keeping the travel speed of the spraying machine throughout the execution of the work within a range of values that are suitable for the type of nozzle being used.

As an alternative, there is also a more sophisticated solution that consists of a double nozzle holder, i.e., provided with two outlets, each of which is associated with a corresponding nozzle and is provided with a corresponding membrane valve for selective opening or closing. The remote control system is programmed to manage, depending on the working conditions, the actuation of the membrane valves to close or open in order to achieve the outflow of liquid only from the most appropriate nozzle, or from both nozzles in parallel, for each nozzle holder.

However, this solution has the drawback that for treatments requiring very different distribution volumes it is necessary to replace the pair of nozzles mounted on the nozzle holder, with an expenditure of time on the part of the operator.

In order to obviate partially these drawbacks, there is an even more sophisticated solution that consists of a quadruple nozzle holder, i.e., provided with four outlets, each of which is associated with a corresponding nozzle and is provided with a corresponding membrane valve for selective opening or closing. In this case also, the remote control system is programmed to manage, depending on the working conditions, the actuation of the membrane valves to close or open in order to obtain the outflow of the liquid only from the most appropriate nozzle, or from a combination of nozzles in parallel, for each nozzle holder.

Although this solution is ideal in terms of effectiveness, it is oversized and too expensive, due to the large number of components required (in particular a valve and corresponding actuation systems for each outlet) for many applications, which in any case require the opening of one or at the most two outlets in parallel.

Furthermore, in some applications this solution cannot be installed due to space occupation, constituted mostly by the flow control valves and by the corresponding actuation systems.

CA 2 804 282 A1 discloses a multiple nozzle body comprising a housing with a liquid feed line connected to a supply line ending in a distribution space from which four connecting lines lead to discharge lines in the housing at the ends of which discharge nozzles are arranged. The connecting lines may be shut off in the region of the distribution space by means of shut-off valves that can be actuated via a switchable disk-like actuating multiple-cam element into respective shut-off or through-flow positions. The actuating element with two switching cams may be rotated to different positions so that through-flow may be released for no, one, or several connecting lines to the discharge lines leading to the discharge nozzles so that the liquid to be discharged may be optionally supplied to no, one, or several connecting lines and thus discharge nozzles in different combinations.

WO 2012/088014 A1 discloses a crop sprayer spray nozzle having a number of spray nozzle heads which are fitted by means of a revolver-type construction on the spray nozzle body so that the correct spray nozzle head may be selected depending on the conditions in which spraying is to be carried out and the fluid which is to be sprayed.

The aim of the present invention is to eliminate the drawbacks described above of the background art by devising a multiple nozzle holder assembly with increased operating flexibility that allows to ensure the possibility to select among different types of nozzles, or combinations of nozzles, to be used for correct control of drop sizes, containing the number of components and consequently the overall cost and space occupation.

Within this aim, an object of the present invention is to limit the number of interventions required of the operator and in particular to not require the direct intervention of the operator to replace the nozzle in use whenever the working parameters, such as the travel speed of the tractor, change.

A further object of the present invention is to ensure the possibility to avoid accidental leakage of the working liquid in inactive conditions, even in case of failure or malfunction of the check valves with which the spraying machine is provided.

Another object of the present invention is to provide a structure that is simple, relatively easy to provide in practice, safe in use, effective in operation, and relatively low in cost.

In accordance with the invention, there is provided a multiple nozzle holder assembly as defined in the appended claims.

Further characteristics and advantages of the present invention will become better apparent from the detailed description of a preferred but not exclusive embodiment of a multiple nozzle holder assembly with increased operating flexibility, illustrated by way of nonlimiting example in the accompanying drawings, wherein:

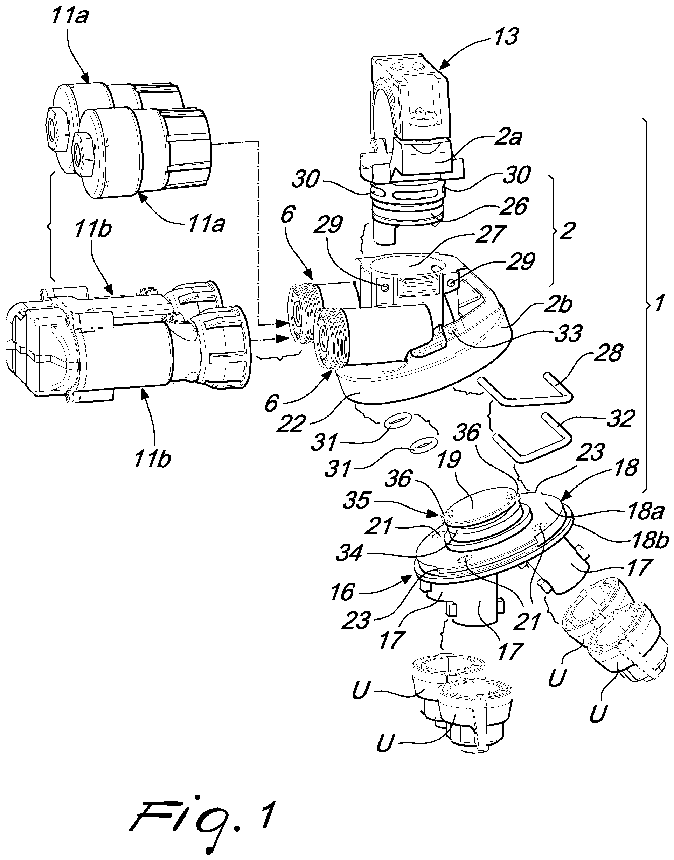

Figure 1 is a schematic exploded view of a nozzle holder assembly according to the invention, which can be fitted alternately with means for actuation of the valve means of the electromechanical or pneumatic type;

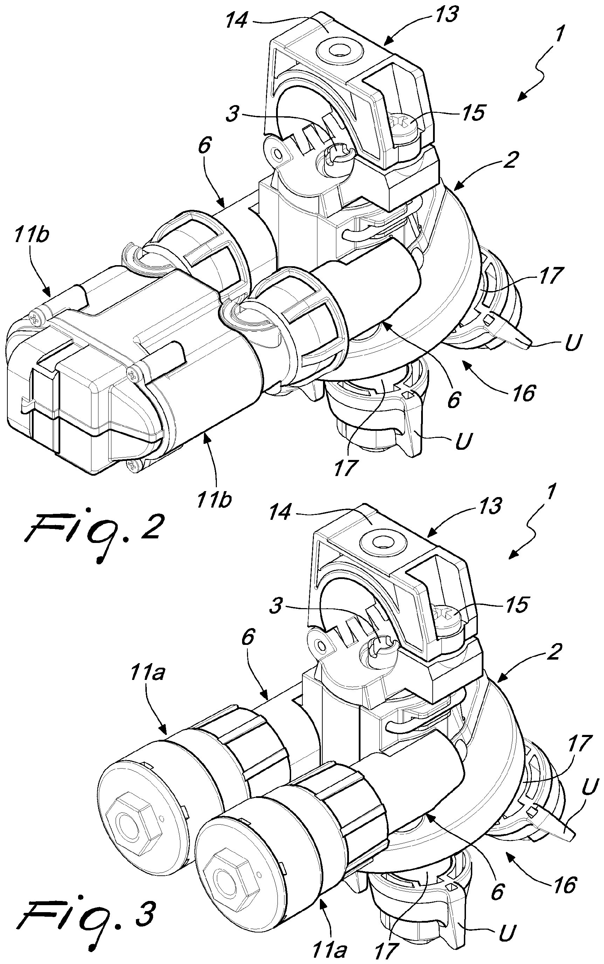

Figure 2 is a schematic perspective view of the nozzle holder assembly of Figure 1, assembled with actuation means of the electromechanical type;
Figure 3 is a schematic perspective view of the nozzle holder assembly of Figure 1 assembled with actuation means of the pneumatic type;
Figure 4 is a partially sectional schematic perspective view of the nozzle holder assembly according to the invention, in the active delivery configuration;
Figure 5 is a partially sectional schematic perspective view of the nozzle holder assembly according to the invention, in the active configuration for stopping the flow;

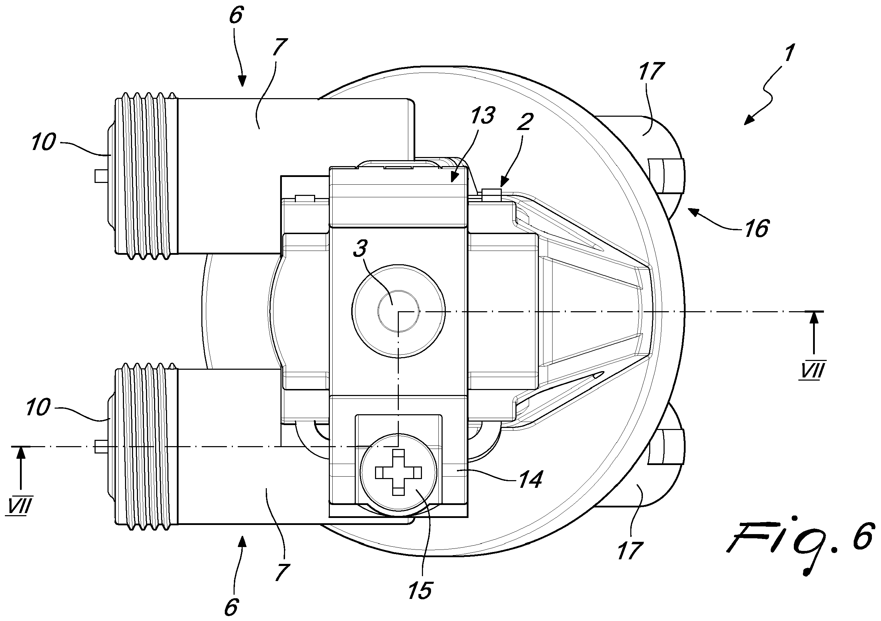

Figure 6 is a schematic top plan view of the nozzle holder assembly according to the invention in one of the active delivery configurations;
Figures 7 and 7a are respective schematic sectional views, taken along the line VII-VII of Figure 6, with the valve means actuated respectively for opening and closure;

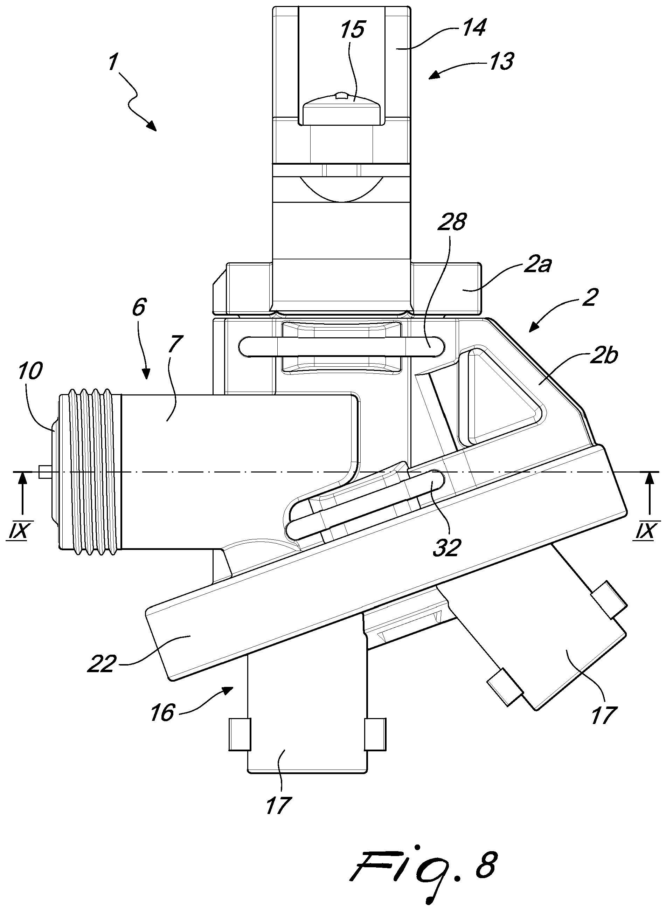

Figure 8 is a schematic side elevation view of the nozzle holder assembly according to the invention in one of the active delivery configurations;
Figures 9 and 9a are respective schematic sectional views, taken along the line IX-IX of Figure 8, with the valve means actuated respectively for opening and for closure;

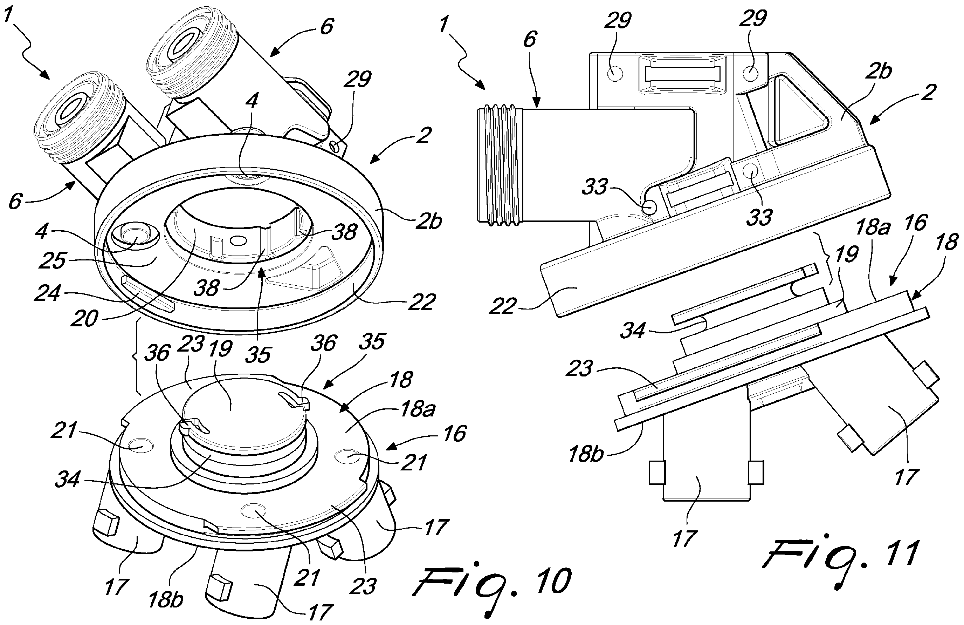

Figure 10 is an exploded perspective view of the additional body and of a portion, viewed from below, of the main body of the nozzle holder assembly according to the invention;
Figure 11 is an exploded side view of the additional body and of a portion of the main body of the nozzle holder assembly according to the invention;
Figure 12 is an exploded perspective view of the additional body and a sectional view of a portion of the main body, illustrating reversible means for locking the nozzle holder assembly according to the invention;
Figure 13 is a sectional perspective view of the nozzle holder assembly according to the invention, with the reversible locking means engaged at the active configuration for stopping the flow;
Figure 14 is a sectional perspective view of the nozzle holder assembly according to the invention, with the reversible locking means engaged at one of the active delivery configurations.

With particular reference to the figures, the numeral 1 generally designates a multiple nozzle holder assembly with increased operating flexibility.

The nozzle holder assembly 1 comprises a main body 2 provided with at least one inlet 3 for a working fluid and with at least two outlets 4, the inlet 3 and each outlet 4 being mutually connected by means of a respective duct 5 for the passage of the working fluid that is sectioned by corresponding valve means 6 for flow control with automatic actuation.

Typically, the valve means 6 are of the type of conventional membrane valves, but flow control elements having a different shape might also be provided.

Each one of the valve means 6 comprises an essentially cylindrical valve body 7, in which there is an annular chamber 8 for the inflow of the fluid and an axial duct 9 for the outflow of said fluid, both of which pass through the valve body 7 and are open at the corresponding mutually opposite ends.

A first end of the valve body 7 is associated with the main body 2 so that the annular chamber 8 and the axial duct 9 are connected to respective portions of the corresponding passage duct 5, one comprising the inlet 3 and the other one comprising the outlet 4.

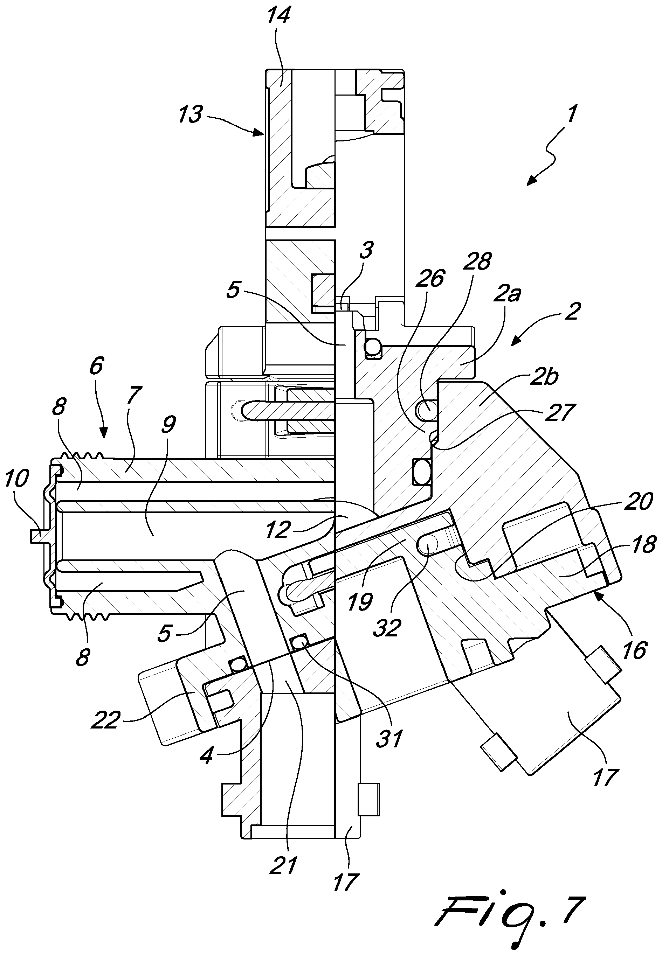

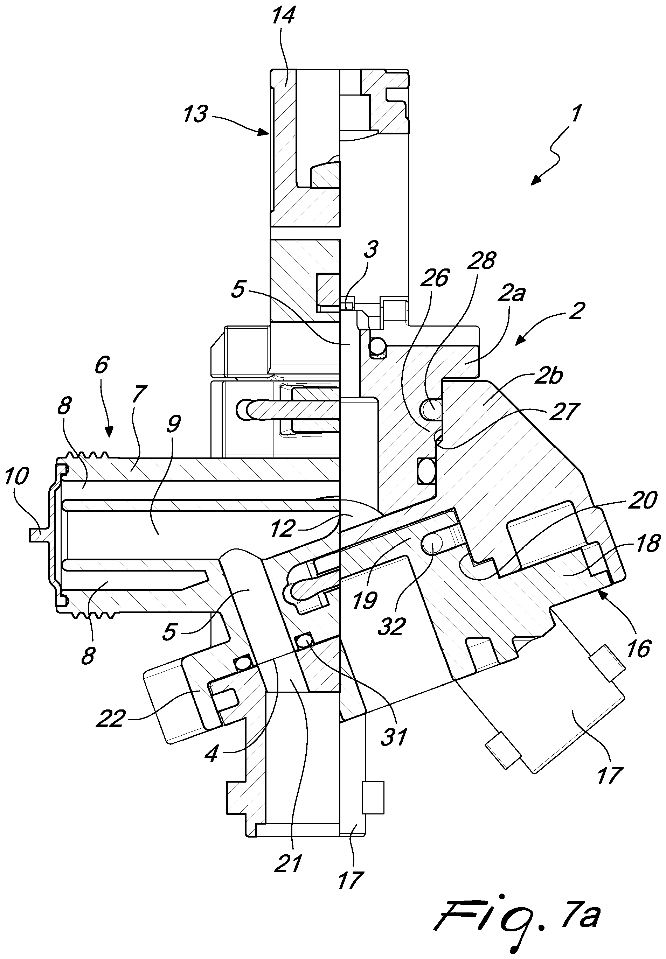

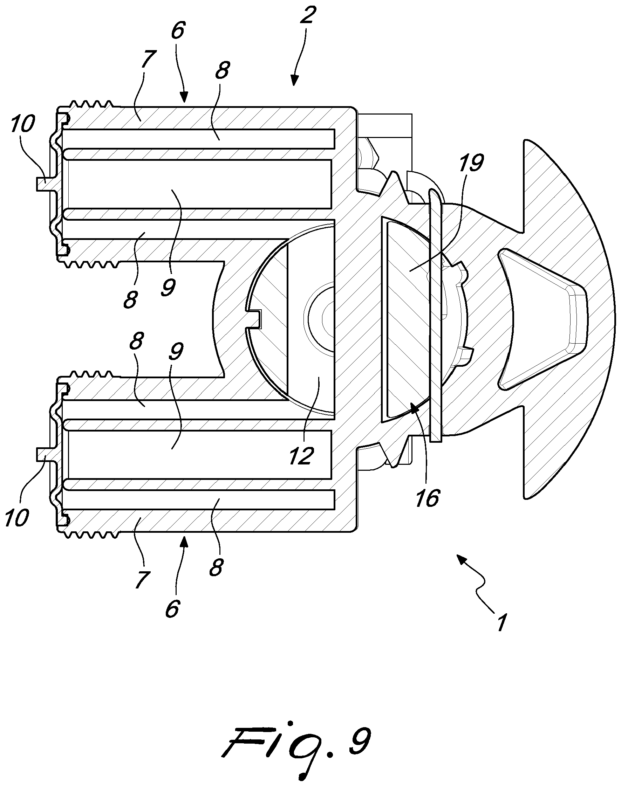

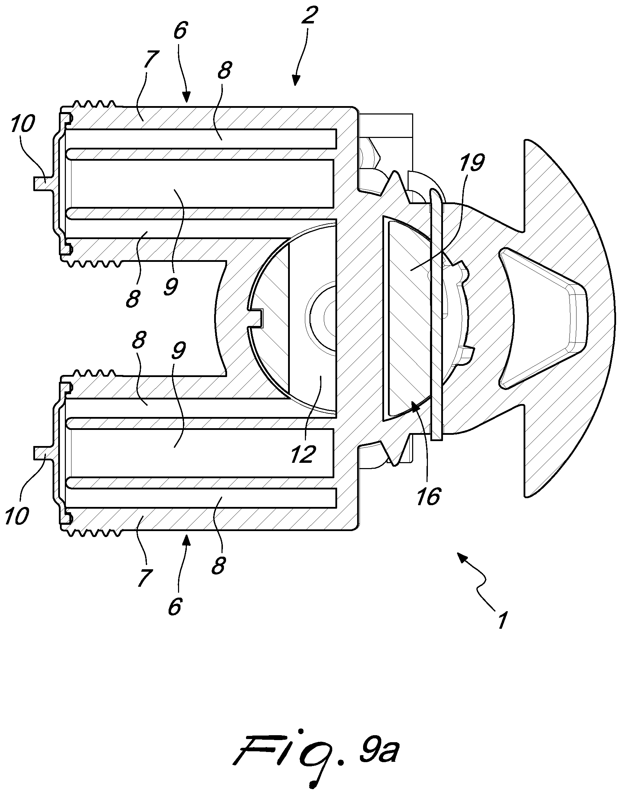

A second end of the valve body 7, arranged opposite the preceding one, is associated with a membrane-type flow control element 10, which covers the open ends of the annular chamber 8 and of the axial duct 9 and can move alternatively between a closed configuration (Figures 7a and 9a), in which it is pressed against the end of the valve body 7, preventing the passage of the working fluid from the annular chamber 8 to the axial duct 9, and an open configuration (Figures 7 and 9), in which it is spaced from the end of the valve body 7 so as to allow the passage of the fluid from the annular chamber 8 to the axial duct 9.

Each one of the valve means 6 comprises automatic means 11 for the actuation of the membrane 10 between the open and closed configurations, which are not described in detail since they are of a conventional type and are actuated by a remote control system for the management of the spraying treatment of a known type.

The actuation means 11 can be for example of the pneumatic type 11a or of the electromechanical type 11b.

In the illustrated embodiment, the fluid passage ducts 5 related to each outlet 4 coincide, for a first extent, at the intake 3, and merge in a chamber 12 for collecting the working fluid, which is defined inside the main body 2 and is connected to the annular chambers 8 of the two valve bodies 7, which are provided in one piece with said main body, whereas they are distinct downstream of the valve means 6 up to the respective outlets 4.

Furthermore, for the use of the nozzle holder assembly 1 in spraying machines of the known type, means 13 for coupling to a distribution bar of a spraying machine, not shown, are provided and are associated with the main body 2 so that the inlet 3 can be arranged in fluid connection with an outlet hole for the working fluid defined in said bar.

The coupling means 13 comprise, for example, an arc-like arm 14 that has an end that is pivoted to the main body 2 proximate to the inlet 3 and the opposite end that can be connected temporarily to said main body by means of a screw 15 that is engaged in a through hole defined in the arm 14 and in a corresponding threaded dead hole defined in the main body 2, so as to fasten the distribution bar between the arm and the main body so that the inlet faces the corresponding outlet hole.

In particular, the main body 2 is provided in two parts: a first part 2a, which comprises the inlet 3 and the first portion of the passage duct 5 that is common to the two outlets 4, and a second part 2b, in which the valve bodies 7, the end portions of the passage ducts 5 and the outlets 4, mutually connected by way of obstacle connection elements, are defined.

The first part 2a has a tubular portion 26 that is inserted hermetically in a corresponding jacket 27 defined on the second part 2b, which are mutually connected by means of a first fork 28, the pins of which are inserted through first through holes 29 defined in the jacket 27 and are accommodated in corresponding grooves 30 formed laterally on the tubular portion 26.

The nozzle holder assembly 1 comprises further an additional body 16 provided with at least three couplings 17 for connection to respective atomizing nozzles U, which is associated with the main body 2 so that it can move among different operating configurations, of which at least two are for delivery and in which selectively two of the at least three couplings 17 each have a fluid connection to one of the outlets 4.

A nozzle U of a different type, suitable to be used in different operating configurations to obtain optimum drop size control, can be applied to each coupling 17.

The couplings 17 can be of the threaded type or can provide for quick coupling systems, depending on the type of nozzle U with which they are to be coupled.

Conveniently, there are fluid-tight elements, of the type of conventional sealing rings 31, between the main body 2 and the additional body 16 at each outlet 4.

Preferably, the main body 2 and the additional body 16 are coupled by means of a rotary coupling, the additional body 16 being able to rotate with respect to the main body 2 among the several operating configurations about a rotation axis. In this case, the couplings 17 are distributed along a circumference that is centered on said rotation axis and are spaced in pairs so that they can be positioned alternately at the outlets 4 in the active delivery configurations.

This solution allows to optimize the space occupation of the nozzle holder assembly 1. As an alternative, to the extent allowed by the space occupation limitations provided by the specific application, the additional body 16 might be associated so that it can slide in a reciprocating manner with the main body 2.

The nozzle holder assembly 1 therefore can assume different configurations depending on the number of inlets 3, of outlets 4 and of couplings 17 provided.

Typically but not exclusively, the nozzle holder assembly 1 can provide an inlet 3, two outlets 4 and three or four couplings 17.

In the case of three couplings 17 distributed on a circumference that is centered on the rotation axis of the additional body 16 and mutually angularly spaced by 120°, it is possible to provide up to three active delivery configurations in which the two outlets 4 are alternatively connected to a pair of consecutive couplings 17.

In the case of four couplings 17 distributed on a circumference that is centered on the rotation axis of the additional body 16 and mutually angularly spaced by 90°, it is possible to provide up to four active delivery configurations in which the two outlets 4 are alternatively connected to a pair of consecutive couplings 17.

Advantageously, there can be at least one additional operating configuration for stopping the flow, in which the outlets 4 are not connected to any of the couplings 17. This solution allows to avoid accidental leakages of working fluid in case of malfunction or failure of the valve means arranged upstream of the nozzle holder assembly 1, for example on the spraying machine.

In the embodiments shown, the additional body 16 is provided with four couplings, but there are two active delivery configurations in which the outlets 4 are alternatively connected to a first pair or a second pair of consecutive couplings 17, the two active delivery configurations being mutually angularly offset by 180°.

This occurs because the rotation axis of the additional body 16 is inclined with respect to the direction of outflow of the working fluid from the pair of couplings 17 with a fluid connection to the outlets 4 in each active delivery configuration.

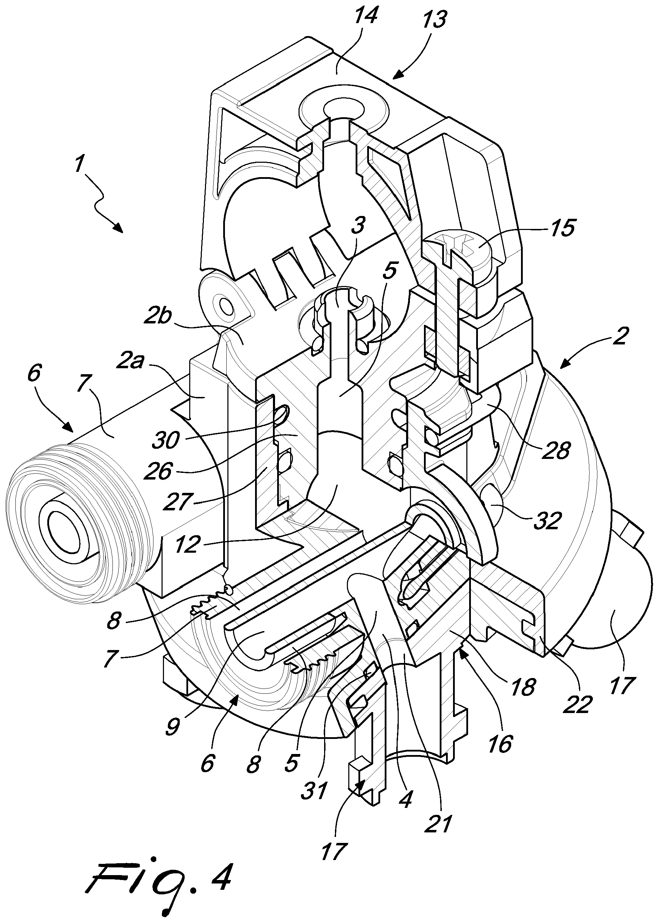

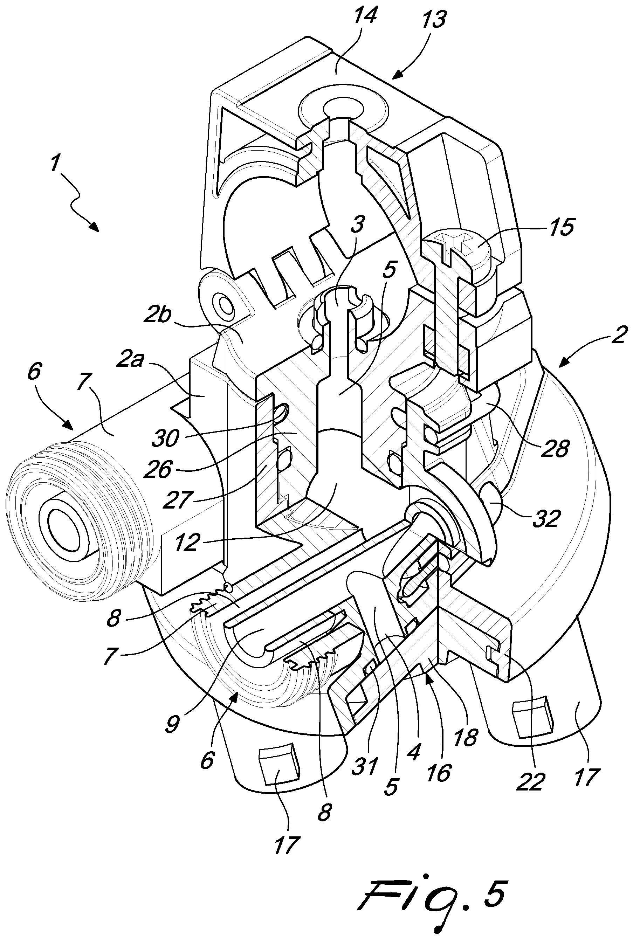

If the rotation axis of the additional body 16 is parallel to the direction of outflow of the working fluid (i.e., vertical with respect to Figures 4 and 5), up to four active delivery configurations, offset by 90°, might be provided.

The additional body 16 comprises a disk 18 that is perpendicular to the rotation axis of said body and has a first face 18a that is directed toward the main body 2, from which a shank 19 having a circular cross-section and centered on said axis protrudes and is inserted rotatably in a corresponding seat 20 provided in the main body 2, and a second face 18b, which is arranged opposite the preceding one, from which the couplings 17 protrude. The disk 18 has through holes 21 between the first and second faces, respectively 18a and 18b, at each coupling 17.

The main body 2 comprises a perimetric band 22 for containing the disk 18, which has a pair of stiffening tabs 23 that protrude in a radial direction and are diametrically opposite and are retained between corresponding wings 24 that protrude from the band 22 and the back wall 25 of the main body 2. This solution avoids the occurrence of flexing of the disk 18, which might cause accidental leaks of the working fluid.

The main body 2 and the additional body 16 are further constrained in an axial direction by means of a second fork 32, the pins of which are inserted through second through holes 33 provided at the base of the main body 2 and are accommodated in a circumferential groove 34 that is defined on the shank 19 to allow the rotation of the additional body with respect to the main one.

Advantageously, there are reversible means 35 for locking the rotation of the additional body 16 with respect to the main body 2 in one or more of the active configurations, preferably in all said configurations.

Said reversible means 35 comprises at least one pawl 36, which is associated with the shank 19, protrudes usually in a radial direction with respect to it, and can move alternately between said protruding position and a retracted position in which it is inserted in a corresponding recess 37 provided in said shank, remaining inscribed in its contour, and at least one corresponding hollow 38 that is defined in the side wall of the seat 20 to accommodate the pawl 36 in a protruding position so as to constrain the rotation of the additional body 16 with respect to the main body 2.

Conveniently, the pawl 36 and the hollow 38 have corresponding contact surfaces that are inclined in the direction that allows the return of said pawl to the retracted position in a first direction of rotation of the additional body 16 with respect to the main body 2 and prevents it in the complementary direction of rotation.

Preferably, the reversible means 35 are provided with two pawls 36, which, as mentioned above, are arranged on the shank 19 in diametrically opposite positions, two corresponding recesses 37 on the shank 19 and at least one pair of corresponding hollows 38 on the seat 20 at at least one of the active configurations.

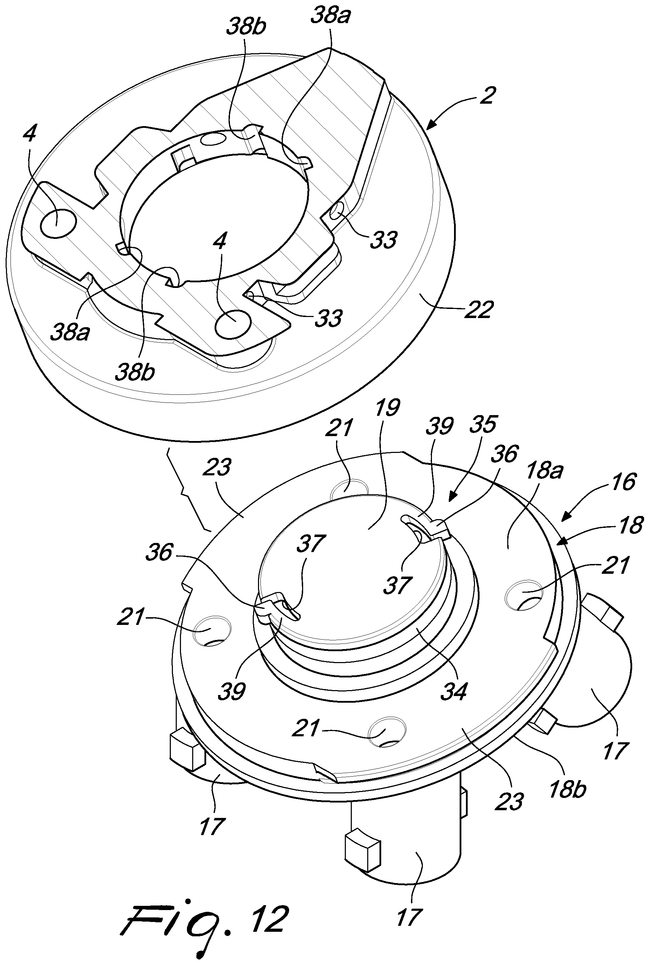

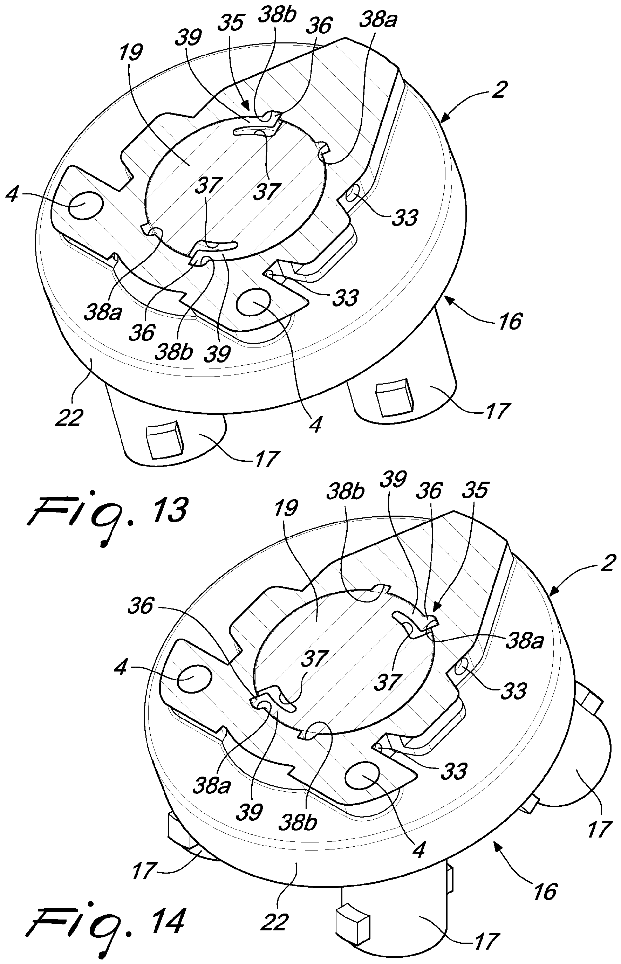

In the embodiment shown, the pawls 36 are provided in one piece with the additional body 16 made of molded plastic material and are connected to the shank 19 by way of respective elastic flexing flaps 39, which return them to the protruding position. In particular, there is a first pair of hollows, designated by the reference numeral 38a, in which the pawls 36 engage at the two active delivery configurations, and a second pair of hollows, designated by the reference numeral 38b, in which the pawls 36 engage at the active configuration for stopping the flow, which is spaced angularly by 45° with respect to the preceding one. With particular reference to Figures 12-14, the shape of the pawls 36 and of the corresponding hollows 38a, 38b is such as to allow the rotation of the additional body 16 with respect to the main body 2 clockwise and prevent it counterclockwise.

Operation of the present invention is straightforward from the above description.

In particular, depending on the treatment to be performed, the operator selects the correct active delivery configuration, i.e., which pair of nozzles U to connect to the outlets 4, on the basis of indications provided by the manufacturer.

By setting the nozzles U in use in the remote control system, it is the system itself that controls the actuation means 11 to achieve the opening or closing of the valve means 6 so as to select the most appropriate nozzle U from which the working fluid is to be delivered or optionally opening them both in order to obtain a parallel flow from both nozzles U depending on the values of the pressure and speed of travel of the spraying machine, which are spot detected in order to achieve correct control of drop size.

If the spraying machine is not used or malfunctions, the nozzle holder assembly 1 can be arranged temporarily in the active configuration for stopping the flow.

In practice it has been found that the described invention achieves the proposed aim and objects, and in particular the fact is stressed that the nozzle holder assembly according to the invention allows to increase the possibility to select the nozzles to be used and the flexibility of use with respect to single nozzle holders equipped with different nozzles or double ones, without entailing the structural complexities and the increases in cost and space occupation that are typical of quadruple nozzle holders.

In particular, the nozzle holder according to the invention allows to achieve the following advantages: with respect to single nozzle holders, the ability to apply an automatic selection of the nozzle in use by means of a remote control system; with respect to double nozzle holders, an increase in the possibility to select among several pairs of nozzles directly available on the nozzle holder itself; and with respect to quadruple nozzle holders, a significant saving in costs and space occupation for all applications that do not require more than two nozzles open in parallel.

Moreover, the multiple nozzle holder according to the invention allows to avoid the risk of accidental leaks of working fluid, which are potentially harmful or polluting, in situations of nonuse or malfunction of the spraying machine.

The invention thus conceived is susceptible of numerous modifications and variations according to the scope of the appended claims.

All the details may further be replaced with other technically equivalent elements.

In practice, the materials used, as well as the contingent shapes and dimensions, may be any according to requirements. Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A multiple nozzle holder assembly (1) with increased operating flexibility, comprising a main body (2) provided with an inlet (3) for a working fluid and with at least two outlets (4) for said fluid, the inlet (3) having a fluid connection to each outlet (4) by means of a respective passage duct (5) that is sectioned by corresponding valve means (6) for flow control with automatic actuation, and further comprising at least three couplings (17) for connection to respective atomizing nozzles (U) and wherein in an operating configuration at least two of said at least three couplings (17) each have a fluid connection to one of said at least two outlets (4), the multiple nozzle holder assembly (1) being **characterized in that** it comprises an additional body (16) which is provided with said at least three couplings (17) and which is associated with said main body (2) so that it can selectively move among several operating configurations at least two of which are delivery configurations.

2. The nozzle holder assembly (1) according to claim 1, **characterized in that** said main body (2) and said additional body (16) are associated by a rotary coupling, the additional body (16) being free to rotate with respect to said main body (2) among said active configurations about a rotation axis and said couplings (17) being distributed along a circumference that is centered on said rotation axis.

3. The nozzle holder assembly (1) according to claim 2, **characterized in that** said rotation axis is oblique with respect to the direction of outflow of the liquid from said at least two couplings (17) that have a fluid connection to said at least two outlets (4) in each one of said active dispensing configurations.

4. The nozzle holder assembly (1) according to claim 2 or 3, **characterized in that** said additional body (16) comprises a disk (18) that has a first face (18a), which is directed toward said main body (2) from which a shank (19) having a circular cross-section protrudes, said shank being inserted so that it can rotate in a corresponding seat (20) provided in the main body (2), and a second face (18b), which is opposite with respect to the first one and from which said at least three couplings (17) protrude, said disk having through holes (21) between the first and second faces at each one of said couplings (17).

5. The nozzle holder assembly (1) according to claim 4, **characterized in that** said main body (2) comprises a perimetric band (22) for containing said disk (18), said disk having at least one stiffening tab (23) that protrudes radially and is retained by at least one corresponding wing (24) that protrudes from the inner wall of said band (22).

6. The nozzle holder assembly (1) according to one or more of the preceding claims 2-5, **characterized in that** it comprises reversible means (35) for locking the rotation of said additional body (16) with respect to said main body (2) at at least one of said active configurations.

7. The nozzle holder assembly (1) according to one or more of the preceding claims, **characterized in that** in the movement with respect to said main body (2), said additional body (16) can assume at least one active configuration for stopping the flow, in which said at least two outlets (4) do not have a fluid connection to any one of said couplings (17).

8. The nozzle holder assembly (1) according to one or more of the preceding claims, **characterized in that** it comprises two of said outlets (4) and four of said couplings (17), which can be associated alternately in pairs with said two outlets (4) in two different active dispensing configurations which are mutually angularly spaced by 180°, there being also an active configuration for stopping the flow that is intermediate between the preceding ones.

9. The nozzle holder assembly (1) according to one or more of the preceding claims, **characterized in that** it comprises means (13) for coupling to a distribution bar of a spraying machine, which are associated with said main body (2), the inlet (3) being adapted to be fluid connected to a hole for the outflow of the working fluid that is defined in said bar.

10. The nozzle holder assembly (1) according to one or more of the preceding claims, **characterized in that** said valve means (6) comprise actuation means (11) of the electromechanical type (11b) or of the pneumatic type (11b) and are managed by means of a remote control system.

## Patentansprüche

1. Eine Halteranordnung (1) für mehrere Düsen mit erhöhter Arbeitsflexibilität, die einen Hauptkörper (2) umfasst, versehen mit einem Einlass (3) für ein Arbeitsfluid und mit mindestens zwei Auslässen (4) für das Fluid, wobei der Einlass (3) eine Fluidverbindung mit jedem Auslass (4) über eine entsprechende Durchgangsleitung (5) hat, die geteilt wird von entsprechenden Ventilmitteln (6) zur Durchflussregelung mit automatischer Betätigung; und weiter mindestens drei Kopplungen (17) zur Verbindung mit entsprechenden Zerstäuberdüsen (U) umfassend, und wobei in einer Arbeitskonfiguration mindestens zwei der mindestens drei Kopplungen (17) jeweils eine Fluidverbindung mit einem der mindestens zwei Auslässe (4) haben, wobei die Halteranordnung (1) für mehrere Düsen **dadurch gekennzeichnet ist, dass** sie einen zusätzlichen Körper (16) umfasst, der mit den mindestens drei Kopplungen (17) ausgestattet und mit dem Hauptkörper (2) so verbunden ist, dass er sich wahlweise zwischen mehreren Arbeitskonfigurationen bewegen kann, von denen mindestens zwei Abgabekonfigurationen sind.

2. Die Halteranordnung (1) für Düsen gemäß Anspruch 1, **dadurch gekennzeichnet, dass** der Hauptkörper (2) und der zusätzliche Körper (16) durch eine Drehkopplung verbunden sind, wobei der zusätzliche Körper (16) frei ist, sich im Verhältnis zu dem Hauptkörper (2) zwischen den aktiven Konfigurationen um eine Drehachse zu drehen, und die Kopplungen (17) entlang einem Umfang verteilt sind, der auf der Drehachse zentriert ist.

3. Die Halteranordnung (1) für Düsen gemäß Anspruch 2, **dadurch gekennzeichnet, dass** die Drehachse mit Bezug auf die Richtung des Ausströmens der Flüssigkeit aus den mindestens zwei Kopplungen (17), die in jeder der aktiven Abgabekonfigurationen eine Fluidverbindung zu den mindestens zwei Auslässen (4) haben, schräg ist.

4. Die Halteranordnung (1) für Düsen gemäß Anspruch 2 oder 3, **dadurch gekennzeichnet, dass** der zusätzliche Körper (16) eine Scheibe (18) umfasst, die eine erste Seite (18a) hat, welche dem Hauptkörper (2) zugewandt ist, aus der ein Schaft (19) mit einem kreisförmigen Querschnitt herausragt, wobei der Schaft so eingesetzt ist, dass er sich in einem dazugehörigen Sitz (20) drehen kann, der im Hauptkörper (2) angebracht ist; und eine zweite Seite (18b), die der ersten gegenüberliegt und aus der die mindestens drei Kopplungen (17) herausragen, wobei die Scheibe an jeder der Kopplungen (17) Durchgangsbohrungen (21) zwischen der ersten und der zweiten Seite hat.

5. Die Halteranordnung (1) für Düsen gemäß Anspruch 4, **dadurch gekennzeichnet, dass** der Hauptkörper (2) einen Umfangsring (22) zum Aufnehmen der Scheibe (18) umfasst, wobei die Scheibe mindestens eine Versteifungslasche (23) hat, die radial herausragt und von mindestens einem dazugehörigen Flügel (24) gehalten wird, der aus der Innenwand des Ringes (22) herausragt.

6. Die Halteranordnung (1) für Düsen gemäß einem oder mehreren der obigen Ansprüche 2-5, **dadurch gekennzeichnet, dass** sie reversible Mittel (35) zum Blockieren der Drehung des zusätzlichen Körpers (16) im Verhältnis zu dem Hauptkörper (2) in mindestens einer der aktiven Konfigurationen umfasst.

7. Die Halteranordnung (1) für Düsen gemäß einem oder mehreren der obigen Ansprüche, **dadurch gekennzeichnet, dass** bei der Bewegung im Verhältnis zu dem Hauptkörper (2) der zusätzliche Körper (16) mindestens eine aktive Konfiguration einnehmen kann, um den Fluss anzuhalten, in welcher die mindestens zwei Auslässe (4) keine Fluidverbindung zu irgendeiner der Kopplungen (17) haben.

8. Die Halteranordnung (1) für Düsen gemäß einem oder mehreren der obigen Ansprüche, **dadurch gekennzeichnet, dass** sie zwei der Auslässe (4) und vier der Kopplungen (17) umfasst, die in zwei verschiedenen aktiven Abgabekonfigurationen, welche voneinander winklig um 180° beabstandet sind, abwechselnd in Paaren mit den beiden Auslässen (4) verbunden werden können, wobei es auch eine aktive Konfiguration zum Anhalten des Flusses gibt, die intermediär zwischen den oben genannten liegt.

9. Die Halteranordnung (1) für Düsen gemäß einem oder mehreren der obigen Ansprüche, **dadurch gekennzeichnet, dass** sie Mittel (13) zum Koppeln mit einem Verteilerstab einer Zerstäubermaschine umfasst, die mit dem Hauptkörper (2) verbunden sind, wobei der Einlass (3) ausgebildet ist, um mit einer Bohrung für das Ausströmen des Arbeitsfluids, die in dem Stab bestimmt ist, fluidverbunden zu werden.

10. Die Halteranordnung (1) für Düsen gemäß einem oder mehreren der obigen Ansprüche, **dadurch gekennzeichnet, dass** die Ventilmittel (6) Betätigungsmittel (11) vom elektromechanischen Typ (11b) oder vom pneumatischen Typ (11b) umfassen und durch ein Fernsteuersystem gesteuert werden.

## Revendications

1. Ensemble support de multiples buses (1) présentant une souplesse de fonctionnement accrue, comprenant un corps principal (2) doté d'une entrée (3) pour un fluide de travail et d'au moins deux sorties (4) pour ledit fluide, l'entrée (3) ayant une connexion fluidique avec chaque sortie (4) au moyen d'un conduit de passage respectif (5) qui est sectionné par un moyen de soupape correspondant (6) pour réguler le flux par un actionnement automatique, et comprenant en outre au moins trois couplages (17) destinés à être connectés à des buses d'atomisation respectives (U), et dans lequel, dans une configuration de fonctionnement, au moins deux desdits au moins trois couplages (17) ont chacun une connexion fluidique avec l'une desdites au moins deux sorties (4), l'ensemble support de multiples buses (1) étant **caractérisé en ce qu'**il comprend un corps supplémentaire (16) qui est doté desdits au moins trois couplages (17) et qui est associé audit corps principal (2) de manière à pouvoir passer de façon sélective entre plusieurs configurations de fonctionnement dont au moins deux sont des configurations de distribution.

2. Ensemble support de multiples buses (1) selon la revendication 1, **caractérisé en ce que** ledit corps principal (2) et ledit corps supplémentaire (16) sont associés par un couplage rotatif, le corps supplémentaire (16) pouvant pivoter librement par rapport audit corps principal (2) entre lesdites configurations actives autour d'un axe de rotation et lesdits couplages (17) étant répartis le long d'une circonférence qui est centrée sur ledit axe de rotation.

3. Ensemble support de multiples buses (1) selon la revendication 2, **caractérisé en ce que** ledit axe de rotation est oblique par rapport à la direction du flux sortant de liquide depuis lesdits au moins deux couplages (17) qui ont une connexion fluidique avec lesdites au moins deux sorties (4) dans chacune desdites configurations de distribution actives.

4. Ensemble support de multiples buses (1) selon la revendication 2 ou 3, **caractérisé en ce que** ledit corps supplémentaire (16) comprend un disque (18) qui est doté d'une première face (18a), qui est orientée vers ledit corps principal (2) à partir de laquelle une tige (19), ayant une section transversale circulaire, dépasse, ladite tige étant insérée de façon à pouvoir pivoter dans un siège correspondant (20) situé dans le corps principal (2), et une seconde face (18b), qui est à l'opposé de la première face et à partir de laquelle lesdits au moins trois couplages (17) dépassent, ledit disque ayant des orifices traversants (21) entre les première et seconde faces de chacun desdits couplages (17).

5. Ensemble support de buses (1) selon la revendication 4, **caractérisé en ce que** ledit corps principal (2) comprend une bande périmétrique (22) pour contenir ledit disque (18), ledit disque ayant au moins une patte de raidissement (23) qui dépasse radialement et est retenue par au moins une aile correspondante (24) qui dépasse de la paroi interne de ladite bande (22).

6. Ensemble support de buses (1) selon une ou plusieurs des revendications précédentes 2 à 5, **caractérisé en ce qu'**il comprend un moyen réversible (35) pour verrouiller la rotation dudit corps supplémentaire (16) par rapport audit corps principal (2) dans au moins l'une desdites configurations actives.

7. Ensemble support de buses (1) selon une ou plusieurs des revendications précédentes, **caractérisé en ce que**, en mouvement par rapport audit corps principal (2), ledit corps supplémentaire (16) peut adopter au moins une configuration active pour arrêter l'écoulement, dans laquelle lesdites au moins deux sorties (4) n'ont pas de connexion fluidique avec l'un quelconque desdits couplages (17).

8. Ensemble support de buses (1) selon une ou plusieurs des revendications précédentes, **caractérisé en ce qu'**il comprend deux desdites sorties (4) et quatre desdits couplages (17), qui peuvent être associés tour à tour en paires avec lesdites deux sorties (4) dans deux configurations de distribution actives différentes qui sont mutuellement espacées d'un angle de 180°, une configuration active existant également pour arrêter l'écoulement, cette configuration étant intermédiaire entre les configurations précédentes.

9. Ensemble support de buses (1) selon une ou plusieurs des revendications précédentes, **caractérisé en ce qu'**il comprend un moyen (13) pour le couplage à une barre de distribution d'une machine de pulvérisation, qui est associé audit corps principal (2), l'entrée (3) étant conçue pour être connectée fluidiquement à un orifice pour permettre l'écoulement sortant du fluide de travail qui est défini dans ladite barre.

10. Ensemble support de buses (1) selon une ou plusieurs des revendications précédentes, **caractérisé en ce que** ledit moyen de soupape (6) comprend un moyen d'actionnement (11) de type électromécanique (11b) ou de type pneumatique (11b) et est géré au moyen d'un système de commande à distance.
